# EUROPEAN PATENT APPLICATION

(11) **EP 2 019 019 A2**
(43) Date of publication of application: **28.01.2009**
(21) Application number: 08013341.6
(22) Date of filing: 24.07.2008
(51) Int. Cl.: B62D 1/19

(54) **Shock absorbing steering apparatus for motor vehicle**

(30) Priority: 27.07.2007 JP 2007196383
(71) Applicant: JTEKT Corporation, Osaka-shi Osaka 542-8502 (JP)
(72) Inventor: Yoshioka, Koji, Osaka-shi Osaka 542-8502 (JP); Matsubara, Hideo, Osaka-shi Osaka 542-8502 (JP); Kawasoko, Naoji, Osaka-shi Osaka 542-8502 (JP); Imagaki, Susumu, Osaka-shi Osaka 542-8502 (JP)
(74) Representative: Steil, Christian

(57) **Abstract**

A shock absorbing steering apparatus for motor vehicle (1) includes an intermediate shaft (5; 5A; 5D; 5E) including first and second ends (25,30). The intermediate shaft (5;5A;5D;5E) includes a hollow bellows portion (52; 52A; 52B; 52D; 52E) having convexes (53;531,532;531B,532B,57;53E) and concaves (54;54A;54E) alternating with each other. The convexes (53;531,532;531B,532B,57;53E) include at least one slant convex (53;531,532;531B,532B;53E). A plane (G; G1, G2; G1B, G2B) including a ridge line (55) of the slant convex (53;531,532;531B,532B;53E) is tilted to a perpendicular plane (C) perpendicular to a center axis (B1) of the intermediate shaft (5;5A;5D;5E). As a result, a part of an axial force (F2) exerted on the intermediate shaft (5;5A;5D;5E) at a motor vehicle collision is converted to a bending force (M1,M2;M3,M4) on the intermediate shaft (5;5A;5D;5E).

## Description

### BACKGROUND OF THE INVENTION

### Field of the Invention

The present invention relates to a shock absorbing steering apparatus for motor vehicle.

### Description of Related Arts

A steering wheel and a steering gear meshed with a rack shaft and the like are generally connected by means of shaft members including a steering shaft, an intermediate shaft and the like (see, for example, the following documents 1 to 3).

According to the following documents 1 to 3, the shaft members include a bellows tube. As described in the following documents 1 to 4, for example, the bellows tube is formed in a hollow structure. In the event of a primary collision in which a vehicle collides with a wall or the like, the bellows tube is contracted so as to absorb the shock. The amount of movement of a vehicular-front end of the shaft member is equivalent to the shock absorbing stroke.
Document 1: Japanese Unexamined Patent Publication No.63-101168A
Document 2: Japanese Unexamined Patent Publication No.8-99641A
Document 3: Japanese Unexamined Patent Publication No.8-230692A
Document 4: Japanese Unexamined Patent Publication No.61-149617A

The longer shock absorbing stroke is the more preferred. In view of the foregoing, the invention is made and an object thereof is to provide a shock absorbing steering apparatus for motor vehicle that can secure more greater shock absorbing stroke.

### SUMMARY OF THE INVENTION

According to an embodiment of the invention for achieving the above object, a shock absorbing steering apparatus for motor vehicle includes: an intermediate shaft including first and second ends; a first universal joint for connecting the first end of the intermediate shaft and a steering shaft; and a second universal joint for connecting the second end of the intermediate shaft and an input shaft of a steering gear.
The intermediate shaft includes a hollow bellows portion having convexes and concaves alternating with each other. The convexes include at least one slant convex. A plane including a ridge line of the slant convex is tilted to a perpendicular plane perpendicular to a center axis of the intermediate shaft. As a result, a part of an axial force exerted on the intermediate shaft at a motor vehicle collision is converted to a bending force on the intermediate shaft.

According to the embodiment, the bellows portion can bucklingly contract when an axial impact force exceeding a predetermined value is transmitted to the intermediate shaft. Thus, the second end of the intermediate shaft can be sufficiently increased in the amount of movability toward a rear side of the vehicle. That is, a greater shock absorbing stroke at primary collision can be secured.

### BRIEF DESCRIPTION OF THE DRAWINGS

FIG.1 is a schematic diagram showing a general structure of a motor vehicle steering system including an extendable shaft for motor vehicle steering according to one embodiment of the invention;
FIG.2 is a side view showing an intermediate shaft and a periphery thereof;
FIG.3 is a side view showing a principal part of the intermediate shaft;
FIG.4 is a sectional view taken on the line IV-IV in FIG.3;
FIG.5 is a partly cross-sectional view showing a tube and a periphery thereof;
FIG.6 is a side view explaining a force exerted on the intermediate shaft at a primary collision;
FIG.7 is a side view showing the principal part of the intermediate shaft subjected to an impact force of above a predetermined value due to the primary collision;
FIG.8 is a side view showing a principal part of another embodiment of the invention;
FIG.9 is a side view showing a principal part of still another embodiment of the invention;
FIG.10 is a side view showing a principal part of yet another embodiment of the invention; and
FIG.11 is a side view showing a principal part of still another embodiment of the invention.

### DETAILED DESCRIPTION OF THE PREFERRED EMBODIMENTS

A preferred embodiment of the invention will be described with reference to the accompanying drawings.

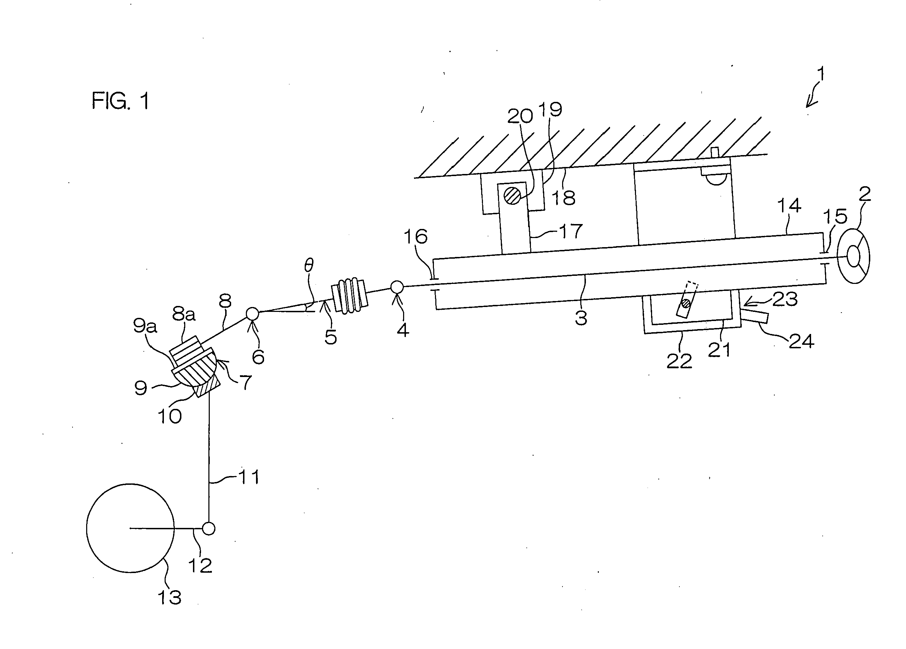

FIG.1 is a schematic diagram showing a general structure of a motor vehicle steering system 1 including an extendable shaft for motor vehicle steering according to one embodiment of the invention. Referring to FIG.1, the motor vehicle steering system 1 is provided as a motor vehicle shock absorbing steering system. The motor vehicle steering system 1 includes a steering wheel 2 as a steering member and a steering shaft 3. The steering shaft 3 is connected to the steering wheel 2 and is rotated according to the steering of the steering wheel 2.

The steering wheel 2 is mounted to one end of the steering shaft 3. The steering shaft 3 is angularly disposed so that the end of the steering wheel 2 mounted thereto is located on an upper side. The other end of the steering shaft 3 is connected to a steering mechanism 7 as a steering gear via a first universal joint 4, an intermediate shaft 5 and a second universal joint 6.

The steering mechanism 7 includes a pinion shaft 8 as an input shaft connected to the second universal joint 6, and a rack shaft 9. The rack shaft 9 includes rack teeth 9a meshed with a pinion 8a at one end of the pinion shaft 8.

When the steering wheel 2 is rotatively operated to rotate the steering shaft 3, the rotary motion is transmitted to the pinion 8a of the steering mechanism 7 via the first universal joint 4, the intermediate shaft 5 and the second universal joint 6 so that the pinion 8a is rotated.

The rotation of the pinion 8a is converted by the rack shaft 9 into a linear movement in a longitudinal direction of the rack shaft 9. This linear movement is transmitted to a knuckle arm 12 via a coupling member 10 fixed to the rack shaft 9 and a tie rod 11 connected to the coupling member 10, whereby the knuckle arm 12 is pivoted. A steerable vehicle wheel 13 supported by the knuckle arm 12 is steered by the pivotal movement of the knuckle arm 12.

The steering shaft 3 is rotatably supported by a column tube 14. The column tube 14 supports the one end of the steering shaft 3 via a bearing 15. The one end of the steering shaft 3 is rotatable relative to the column tube 14 and is relatively unmovable in the axial direction. The column tube 14 also supports the other end of the steering shaft 3 via a bearing 16. The other end of the steering shaft 3 is rotatable relative to the column tube 14 and is relatively unmovable in the axial direction.

A first bracket 17 is fixed to the other end of the column tube 14. The first bracket 17 is supported by a second bracket 19 via a support shaft 20. The second bracket 19 is fixed to a vehicle body 18. The column tube 14 is pivotable about the support shaft 20.

A third bracket 21 is fixed to the one end of the column tube 14. The third bracket 21 opposes a fourth bracket 22 fixed to the vehicle body 18. The third bracket 21 is locked to the fourth bracket 22 by means of a lock mechanism 23.

The lock can be released by manipulating an operating lever 24 of the lock mechanism 23. An operation of swinging the steering shaft 3 and column tube 14 about the support shaft 20 is enabled by release of the lock, that is, a tilt operation is enabled.

The intermediate shaft 5 is horizontally disposed so as to be substantially in parallel relation to the ground surface. A vehicle engine (not shown) and the like are disposed below the intermediate shaft 5.

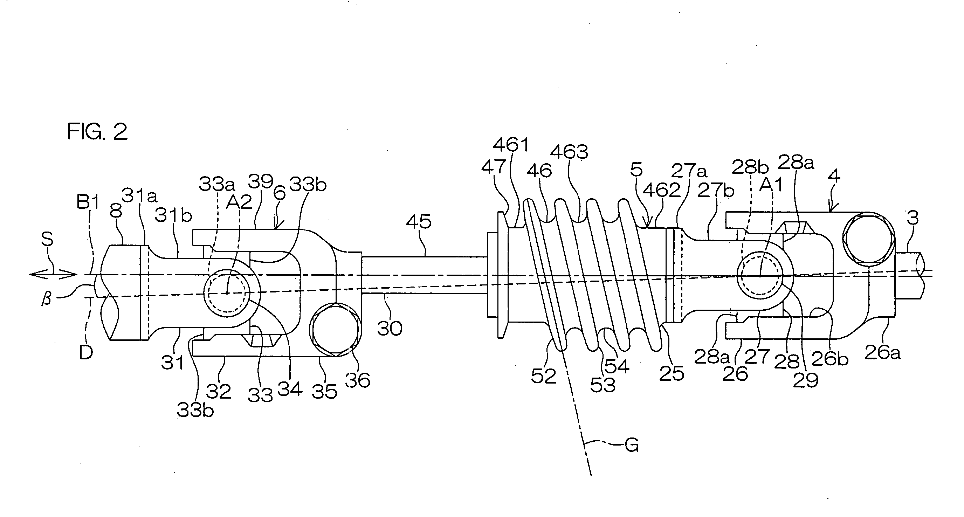

FIG.2 is a side view showing the intermediate shaft 5 and a periphery of the intermediate shaft 5.

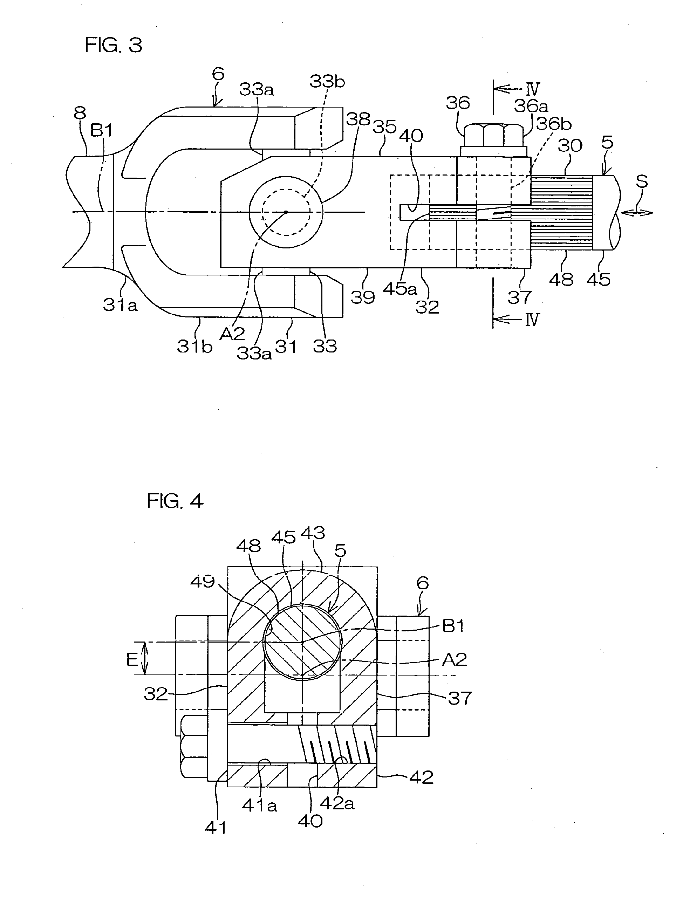

FIG.3 is a side view showing a principal part of the intermediate shaft 5. FIG.4 is a sectional view taken on the line IV-IV in FIG.3.

Referring to FIG.2, the first universal joint 4 is provided as "one universal joint on the other side" of the intermediate shaft. The first universal joint 4 interconnects a first end 25 of the intermediate shaft 5 and the other end of the steering shaft 3. The first universal joint 4 includes a pair of yokes 26, 27 and a cross shaft 28 interconnecting the pair of yokes 26, 27.

The one yoke 26 includes a main body 26a and a fork 26b. The other end of the steering shaft 3 is fixed to main body 26a. The fork 26b is extended as bifurcated from the main body 26a. The fork 26b bears a pair of trunions 28a of the cross shaft 28 by means of bearings (not shown).

The other yoke 27 includes a main body 27a and a fork 27b. The main body 27a joins the first end 25 of the intermediate shaft 5. The fork 27b is extended as bifurcated from the main body 27a. The fork 27b bears a pair of trunions 28b of the cross shaft 28 by means of bearings (not shown). The joint center A1 of the first universal joint 4 is defined by an intersection between the center axis of the pair of trunions 28a of the cross shaft 28 and the center axis of the pair of trunions 28b thereof.

Referring to FIG.2 and FIG.3, the second universal joint 6 is provided as "one universal joint on the one side" of the intermediate shaft. The second universal joint 6 interconnects a second end 30 of the intermediate shaft 5 and the pinion shaft 8. The second universal joint 6 includes a pair of yokes 31, 32 and a cross shaft 33 interconnecting the pair of yokes 31, 32.

The one yoke 31 includes a main body 31a and a fork 31b. The pinion shaft 8 is fixed to the main body 31a. The fork 31b is extended as bifurcated from the main body 31a. The fork 31b bears a pair of trunions 33a of the cross shaft 33 by means of bearings 34. The axis of the pinion shaft 8 intersects with the joint center A2 of the second universal joint 6.

The other yoke 32 includes a main body 35 and a bolt 36 fixed to the yoke main body 35. The bolt 36 includes a head 36a and a shank 36b.

Referring to FIG.3 and FIG.4, the yoke main body 35 includes a cylindrical portion 37 and a fork 39. The second end 30 of the intermediate shaft 5 is inserted in the cylindrical portion 37 along an axial direction S of the intermediate shaft 5, so as to retain the second end 30. The fork 39 is extended as bifurcated from one end of the cylindrical portion 37 and bears a pair of trunions 33b of the cross shaft 33 by means of bearings 38.

The cylindrical portion 37 forms a slit 40 extended along the axial direction S. The cylindrical portion 37 includes a pair of tabs 41, 42 opposed to each other across the slit 40. The shank 36b of the bolt 36 extends through a bolt through-hole 41a formed in the one tab 41 and screwed into a screw hole 42a formed in the other tab 42.

Thus, the pair of tabs 41, 42 are brought close to each other so as to decrease the diameter of the cylindrical portion 37 whereby the second end 30 of the intermediate shaft 5 is prevented from dropping out between the pair of tabs 41, 42. The cylindrical portion 37 has a U-shaped cross-section and the pair of tabs 41, 42 are connected by a connecting portion 43.

The joint center A2 of the second universal joint 6 is defined by an intersection between the center axis of the pair of trunions 33a of the cross shaft 33 and the center axis of the pair of trunions 33b thereof.

Referring to FIG.2, the intermediate shaft 5 has a function as a torque transmission shaft and a function as an extendable shaft. The intermediate shaft 5 includes an elongate shaft portion 45 and a tube 46.

The center axes of the shaft portion 45 and tube 46 are each aligned with the center axis B1 of the intermediate shaft 5. The tube 46 includes the first end 25 of the intermediate shaft 5. The shaft portion 45 includes the second end 30 of the intermediate shaft 5.

The shaft portion 45 extends in the axial direction S of the intermediate shaft 5. One end of the shaft portion 45 is connected rotatable together with one end 461 of the tube 46 via a collar 47 and relatively unmovable in the axial direction S. The other end of the shaft portion 45 constitutes the second end 30 of the intermediate shaft 5.

Referring to FIG.3 and FIG.4, the other end of the shaft portion 45 is formed with a male serration 48. The male serration 48 is inserted through the cylindrical portion 37 of the other yoke 32 of the second universal joint 6. The male serration 48 is meshed with a female serration 49 formed on inside surfaces of the one tab 41, the other tab 42 and the connecting portion 43 so as to be capable of torque transmission. The shaft portion 45 and the cylindrical portion 37 may be spline-coupled.

Thus, the other yoke 32 of the second universal joint 6 and the shaft portion 45 are connected rotatable together about the center axis B1 of the intermediate shaft 5 and relatively movable in the axial direction S.

When the pinion shaft 8 and the second universal joint 6 are moved toward the shaft portion 45 by more amount than predetermined due to the occurrence of a primary collision in which a vehicle collides with a wall or the like, the cross shaft 33 of the second universal joint 6 abuts against the other end face 45a of the shaft portion 45. Thus, the second universal joint 6 is restricted from moving toward one side (the rear side of the vehicle) in the axial direction S relative to the shaft portion 45.

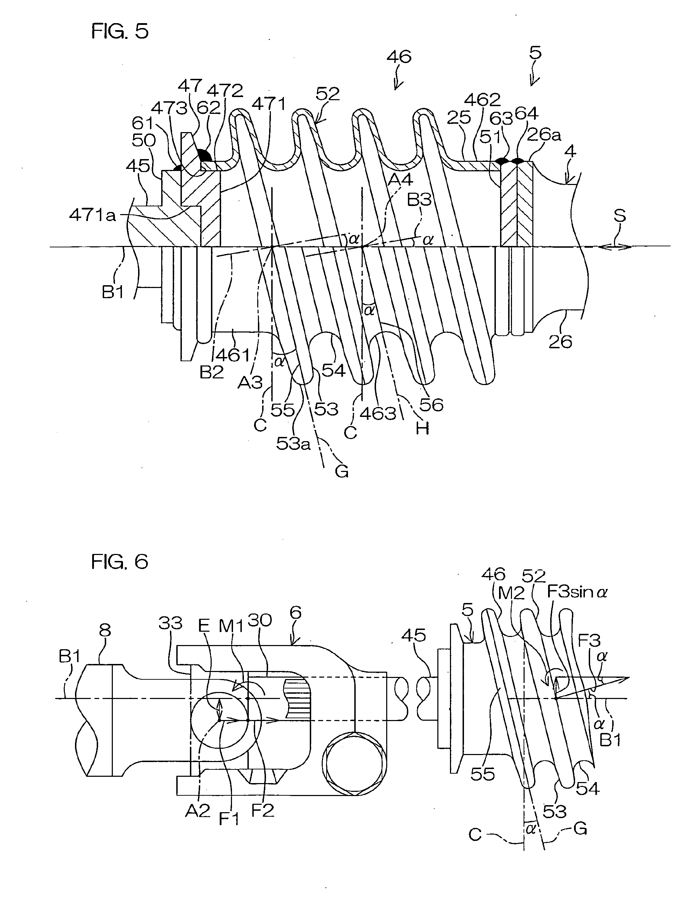

FIG.5 is a partly cross-sectional view showing the tube 46 and a periphery thereof. Referring to FIG.5, the tube 46 includes the one end 461 and the other end 462 which are shaped like a cylinder, and an intermediate portion 463.

The one end 461 of the tube 46 joins one end of the shaft portion 45 via the collar 47 and is rotatable together with this one end. The collar 47 is formed of, for example, a metal member. The collar 47 includes a disk-like main body 471. The center axis of the main body 471 is aligned with the center axis B1 of the intermediate shaft 5. The one end of the shaft portion 45 is inserted in a recess 471a formed on one side surface of the main body 471.

The shaft portion 45 is formed with a flange 50 on an outer periphery of the one end thereof. The flange 50 abuts against the one side surface of the main body 471. An outer periphery of the flange 50 and the one side surface of the main body 471 are fixed together by welding, for example. A weld metal 61 formed by welding extends on the overall circumference of the outer periphery of the flange 50.

An inner periphery of the one end 461 of the tube 46 is fitted on an outer periphery 472 of the other end of the collar 47. The one end 461 of the tube 46 and an annular step 473 formed on the outer periphery 472 of the collar 47 abut against each other and are fixed together by welding, for example. A weld metal 62 formed by welding extends on the overall circumference of the annular step 473.

The shaft portion 45 and the collar 47 may also be fixed together by caulking. The collar 47 and the tube 46 may also be fixed together by caulking.

The other end 462 of the tube 46 is connected to the main body 26a of the other yoke 26 of the first universal joint 4 via a collar 51. The collar 51 is shaped like a disk, for example, and has the center axis aligned with the center axis B1 of the intermediate shaft 5. The main body 26a of the other yoke 26 has the center axis aligned with the center axis B1.

The other end 462 of the tube 46 is abutted against one side surface of the collar 51 and both are fixed together by welding, for example. A weld metal 63 interconnecting the tube 46 and the collar 51 is formed along the overall circumference of the collar 51.

The other end surface of the collar 51 is abutted against the main body 26a of the other yoke 26 of the first universal joint 4 and both are fixed together by welding, for example. A weld metal 64 interconnecting the collar 51 and the main body 26a is formed along the overall circumference of the collar 51.

The tube 46 and the collar 51 may also be fixed together by caulking. The collar 51 and the main body 26a of the other yoke 26 may also be fixed to each other by caulking.

The tube 46 is formed with a hollow bellows portion 52 at the intermediate portion 463 thereof. The bellows portion 52 is disposed in proximity to the first end 25 of the intermediate shaft 5. One end of the bellows portion 52 joins the one end 461 of the tube 46. The other end of the bellows portion 52 joins the other end 462 of the tube 46.

The bellows portion 52 is for bucklingly contracting at primary collision in which the vehicle collides with the wall or the like. The bellows portion 52 includes slant convexes 53 as plural convexes and a plurality of concaves 54. These slant convexes 53 and concaves 54 are disposed alternately with each other in the axial direction S of the intermediate shaft 5. Each of the slant convexes 53 has a chevron-shaped cross-section. Each individual slant convex 53 is configured in the same shape.

Each of the slant convexes 53 has a symmetrical shape with respect to a ridge line 55 as an outer diameter of a crest 53a thereof. The center axis B2 of each slant convex 53 is tilted to the center axis B1 of the intermediate shaft 5 at a predetermined tilt angle α. The ridge line 55 of each slant convex 53 defines a circle, for example. The center A3 of the ridge line 55 of each slant convex 53 is located on the center axis B1 of the intermediate shaft 5.

One of the features of the embodiment is that a first plane G as a plane including the ridge line 55 of each slant convex 53 is tilted to a phantom perpendicular plane C perpendicular to the center axis B1 of the intermediate shaft 5 at a predetermined tilt angle α.

The first planes G of the ridge lines 55 of the individual slant convexes 53 are each tilted in the same direction. While the plural slant convexes 53 are provided according to the embodiment, at least one of the plural convexes provided in the bellows portion 52 may be tilted. The bellows portion may also be provided a convex having a ridge line located on the perpendicular plane C perpendicular to the center axis B1.

Each individual concave 54 has a U-shaped cross-section and is configured in the same shape. The concaves 54 are each arranged in the axial direction S. A root line 56 of each concave 54 is located on a second plane H. That is, the second plane H includes the root line 56. The second plane H is tilted to the perpendicular plane C at a predetermined angle α. The root line 56 defines a circle parallel to the ridge line 55 of the slant convex 53. The center axis B3 of the root line 56 is in parallel to the center axis B2 of each slant convex 53. The center A4 of the root line 56 is located on the center axis B1 of the intermediate shaft 5. The diameter of the root on an outer periphery of each concave 54 is substantially equal to an outside diameter of the one end 461 of the tube 46.

The individual slant convexes 53 and the corresponding concaves 54 are continuously connected to each other. Specifically, the outer periphery of each slant convex 53 and the outer periphery of the corresponding concave 54 are smoothly connected. Further, an inner periphery of each slant convex 53 and an inner periphery of the corresponding concave 54 are smoothly connected.

Referring to FIG.2 and FIG.4 again, the intermediate shaft 5 rotates about a predetermined line D as an axis of rotation. The line D interconnects the joint center A1 of the first universal joint 4 and the joint center A2 of the second universal joint 6.

One of the features of the embodiment is that the center axis B1 of the intermediate shaft 5 is tilted to the line D at a predetermined angle β.

Specifically, the joint center A2 of the second universal joint 6 as one joint is arranged offset from the center axis B1 of the intermediate shaft 5. The joint center A2 of the second universal joint 6 is arranged spaced away from the center axis B1 by a predetermined offset amount E in the direction perpendicular to the center axis B1.

The joint center A1 of the first universal joint 4 as the other universal joint is located on the center axis B1 of the intermediate shaft 5.

When the intermediate shaft 5 is viewed in a radial direction thereof so as to see that the joint center A2 is spaced away from the center axis B1 of the intermediate shaft 5 by the offset amount E, as illustrated in FIG.2, the first plane G is tilted to the center axis B1 at a greater angle from the perpendicular state and is tilted to the line D at a smaller angle from the perpendicular state.

Referring to FIG.6, the motor vehicle steering system having the above-described general structure may encounter the primary collision so that an impact force exceeding a predetermined value directed to the rear side of the vehicle is inputted to the pinion shaft 8. At this time, an impact force F1 from the pinion shaft 8 is transmitted to the second universal joint 6. Hence, the second universal joint 6 slides toward the rear side of the vehicle relative to the intermediate shaft 5 so that the cross shaft 33 collides with the second end 30 of the intermediate shaft 5.

Accordingly, an impact force F2 from the cross shaft 33 is transmitted to the second end 30 of the intermediate shaft 5. Hereat, a bending moment M1 is exerted on the second end 30 of the intermediate shaft 5 because the joint center A2 of the second universal joint 6 is offset from the center axis B1 of the intermediate shaft 5. That is, a part of the impact force F2 as an axial force exerted on the intermediate shaft 5 is converted to the bending moment M1 as a bending force on the intermediate shaft 5.

The impact force F2 inputted to the intermediate shaft 5 is transmitted to the bellows portion 52 of the tube 46 via the shaft portion 45. Accordingly, a force F3 is transmitted from one slant convexes 53 of the bellows portion 52 to the corresponding concave 54. The direction of the force F3 is tilted to the center axis B1 at the tilt angle α. The force F3 contains a component F3sinα perpendicular to the center axis B1.

In consequence of the production of the component F3sinα, a bending moment M2 is exerted on the intermediate shaft 5. That is, a part of the impact force F2 as the axial force exerted on the intermediate shaft 5 from the universal joint 6 is converted to the bending moment M2 as the bending force on the intermediate shaft 5.

A direction in which the bending moment M2 bends the bellows portion 52 coincides with a direction in which the bending moment M1 bends the bellows portion 52. Thus, the direction of the bending moment M2 produced due to the first plane G tilted to the perpendicular plane C coincides with the direction of the bending moment M1 produced due to the center axis B1 tilted to the line D.

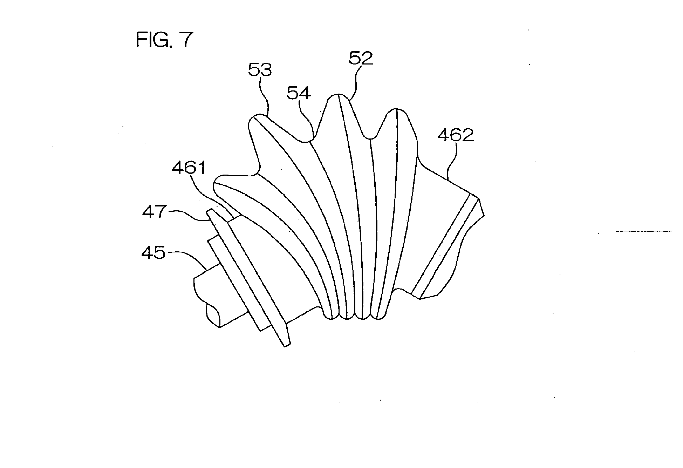

As a result, the intermediate shaft 5 is buckled at the bellows portion 52, as shown in FIG.7, while the bellows portion 52 is contracted.

When the impact force exceeding the predetermined value is exerted on the intermediate shaft 5 from the first universal joint 4, the bellows portion 52 of the intermediate shaft 5 is also capable of buckling and contracting.

According to the embodiment as described above, when the impact force F2 is transmitted from the pinion shaft 8 to the intermediate shaft 5 via the second universal joint 6 at the occurrence of the primary collision in which the vehicle collides with the wall or the like, the bending moments M1, M2 derived from the impact force F2 are exerted on the intermediate shaft 5.

When the impact force F2 exceeding the predetermined value is transmitted to the intermediate shaft 5, therefore, the bellows portion 52 of the intermediate shaft 5 can be buckled by the bending moments M1, M2 derived from the impact force F2. Further, the bellows portion 52 is contracted due to the impact force F2. In this manner, the bellows portion 52 of the intermediate shaft 5 develops both the buckling and the contraction. Accordingly, the second end 30 of the intermediate shaft 5 is sufficiently increased in the amount of movability toward the rear side of the vehicle.
That is, a greater shock absorbing stroke at primary collision can be secured.

In contrast to an arrangement wherein the amount of contraction of the bellows portion is increased by merely increasing the overall length of a bellows tube so as to secure the shock absorbing stroke, the embodiment utilizes the contraction and buckling of the bellows portion 52. Therefore, the embodiment can secure the same impact absorbing stroke as that of the above illustrative arrangement with decreasing the overall length of the intermediate shaft 5. The downsizing of the intermediate shaft 5 leads to an increased flexibility in layout design of the motor vehicle steering system 1.

Further, the center axis B1 of the intermediate shaft 5 can be tilted to the line D by the simple arrangement wherein the joint center A2 of the second universal joint 6 is offset from the center axis B1 of the intermediate shaft 5.

Furthermore, the intermediate shaft 5 is provided with the shaft portion 45. This does not need to form the bellows portion 52 across the entire range of the intermediate shaft 5 in the axial direction S. Hence, the bellows portion 52, which involves a comparatively complex production process, may be provided minimal to reduce the manufacture cost.

The shaft portion 45 and the bellows portion 52 are disposed in coaxial relation. This facilitates the relative positioning of the shaft portion 45 and the bellows portion 52 and hence, the manufacture cost is further reduced by virtue of the simplified manufacture process.

When the one end of the shaft portion 45 and the collar 47, and the collar 47 and the one end 461 of the tube 46 are welded, the overall circumferences of the corresponding portions can be welded while rotating the shaft portion 45, the collar 47 and the tube 46 about the same axis by using jigs. Accordingly, a uniform welding on the overall circumferences thereof is easily accomplished.

When an arrangement is adopted wherein the shaft portion and the tube are eccentrically fixed, for example, distance between a welding member such as a welding rod and a welded part is continuously varied while the shaft portion and the tube are rotated about the same axis and welded on the overall circumferences thereof. It is therefore difficult to accomplish the uniform welding between the shaft portion and the tube. In order to achieve the uniform welding, an arrangement for maintaining a constant distance between the welding member and the welded part is required. This results in complex welding. According to the embodiment, the welding does not require such complexity.

Since the second end 30 and the cylindrical portion 37 are serration-fitted to allow relative movement in the axial direction S, the intermediate shaft 5 may be used as the extendable shaft.

Further, the center axis (the center axis B1 of the intermediate shaft 5) of the shaft portion 45 inserted between the pair of tabs 41, 42 is arranged offset so as not to intersect with the joint center A2 of the second universal joint 6. In such a simple arrangement, the center axis B1 of the intermediate shaft 5 and the line D can be tilted.

The joint center A1 of the first universal joint 4 is located on the center axis B1 of the intermediate shaft 5. Such a simple arrangement facilitates the positioning of the first universal joint 4 and the intermediate shaft 5.

When the motor vehicle steering system 1 is assembled to the vehicle body, the other yoke 32 of the second universal joint 6 may sometimes be slid relative to the intermediate shaft 5. In this case, the tube 46 (the bellows portion 52) is disposed closer to the first end 25 of the intermediate shaft 5 so that the other yoke 32 of the second universal joint 6 is increased in the amount of slidable movement toward the bellows portion 52 in the axial direction S. This results in an increased flexibility in handling the second universal joint 6 to assemble the motor vehicle steering system 1 to the vehicle body.

The force F3 transmitted from the slant convex 53 to the concave 54 due to the impact force F2 at primary collision is in the direction perpendicular to the ridge line 55 of the slant convex 53. Hence, the force F3 contains the component F3sinα perpendicular to the axial direction S of the intermediate shaft 5, so that the bending moment M2 acts to bend the bellows portion 52.

As a result, the buckling of the bellows portion 52 can be promoted. When the impact force F2 exceeding the predetermined value is exerted on the intermediate shaft 5, the bellows portion 52 bucklingly contracts, so that the second end 30 of the intermediate shaft 5 is further increased in the amount of movability toward the rear side of the vehicle. That is, a greater shock absorbing stroke at primary collision can be secured.

The first planes G including the ridge lines 55 of the slant convexes 53 are tilted in the same direction. Accordingly, the forces transmitted from the respective slant convexes 53 to the adjoining concaves 54 are directed in the same direction. As a result, the force to bend the bellows portion 52 is increased further.

The invention is not limited to the contents of the foregoing embodiment and various changes or modifications may be made within the scope of the claims thereof.

The following description is principally made on differences from the embodiment shown in FIG.1 to FIG.7. Same reference numerals are given to the same components and the description thereof is omitted.

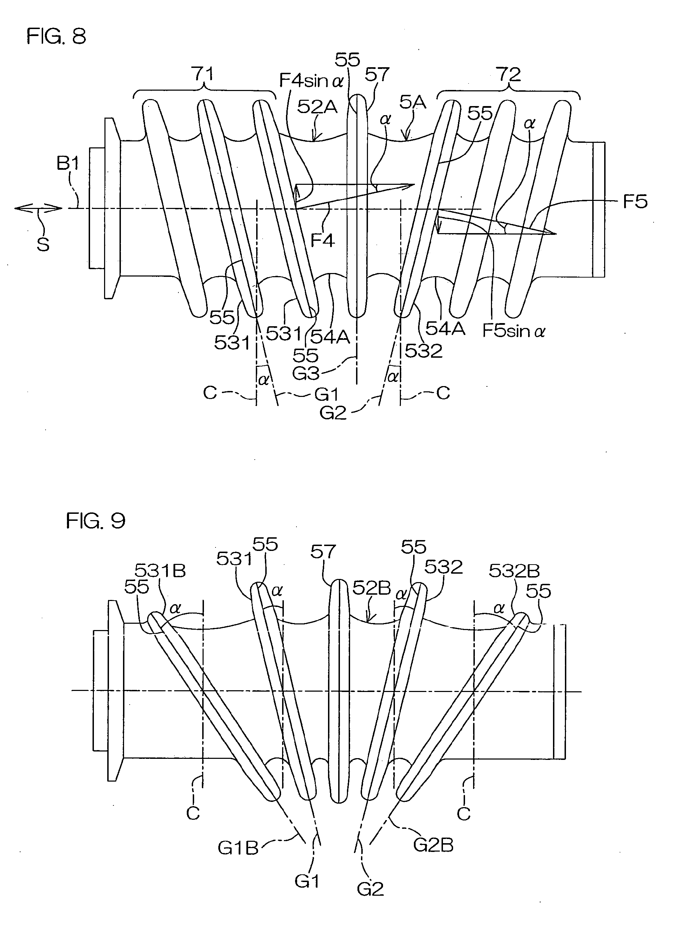

As shown in FIG.8, for example, there may be provided an intermediate shaft 5A. The intermediate shaft 5A includes a bellows portion 52A. The bellows portion 52A includes a first slant convex 531 and a second slant convex 532. The first slant convex 531 and the second slant convex 532 each may be provided more than one. Otherwise, only one of either slant convex may be provided. According to the embodiment, three of the first slant convexes 531 and three of second slant convexes 532 are each provided.

A first plane G1 including the ridge line 55 of each first slant convex 531 and a first plane G2 including the ridge line 55 of each second slant convex 532 are tilted to the perpendicular plane C and in the mutually opposite directions.

The individual first planes G1 of the first slant convexes 531 are tilted to the perpendicular plane C at the same tilt angle α. The individual first planes G2 of the second slant convexes 532 are tilted to the perpendicular plane C at the same tilt angle α.

The first slant convexes 531 and the second slant convexes 532 constitute respective groups. Specifically, there are provided a first group 71 including the first slant convexes 531 and a second group 72 including the second slant convexes 532. These first group 71 and second group 72 are spaced away in the axial direction S of the intermediate shaft 5A.

A perpendicular convex 57 is disposed between the first group 71 and the second group 72. The center axis of the perpendicular convex 57 is aligned with the center axis B1 of the intermediate shaft. A plane G3 including the ridge line 55 of the perpendicular convex 57 is perpendicular to the center axis B1 of the intermediate shaft. However, the perpendicular convex 57 need not be provided.

In the above-described arrangement, a force F4 exerted onto its adjoining concave 54A by one first slant convexes 531 in conjunction with the primary collision of the vehicle is directed in a direction perpendicular to the plane G1 of the ridge line 55 of the first slant convex 531. This force F4 contains a component F4sinα perpendicular to the center axis B1.

On the other hand, a force F5 exerted onto its adjoining concave 54A by one second slant convexes 532 is directed in a direction perpendicular to the plane G2 of the ridge line 55 of the second slant convex 532. This force F5 contains a component F5sinα perpendicular to the center axis B1. These components F4sinα and F5sinα are directed in the mutually opposite directions.

According to the embodiment, the component F4sinα in the force F4 transmitted from the first slant convex 531 to an adjoining concave 54A in the direction perpendicular to the center axis B1 of the intermediate shaft 5A is directed in the opposite direction to that of the component F5sinα in the force transmitted from the second slant convex 532 to an adjoining concave 54A in the direction perpendicular to the center axis B1.

As a result, the buckling of the bellows portion 52A due to the provision of the first slant convexes 531 can be directed in the opposite direction to that of the buckling of the bellows portion 52A due to the provision of the second slant convexes 532. Therefore, the buckling of the bellows portion 52A can be promoted.

The bellows portion 52A of the embodiment shown in FIG.8 may be replaced by a bellows portion 52B shown in FIG. 9. The bellows portion 52B differs from the bellows portion 52A in the following two points. (1) Of the first slant convexes 531, 531B, the first plane G1, G1B of the slant convex farther away from the second slant convexes 532, 532B has the greater tilt angle α to the perpendicular plane C. (2) Of the second slant convexes 532, 532B, the first plane G2, G2B of the slant convex farther away from the first slant convexes 531, 531B has a greater tilt angle α to the perpendicular plane C.

The first plane G1 of the first slant convex 531 relatively closer to the second slant convexes 532, 532B has a relatively smaller tilt angle α. The first plane G1B of the first slant convex 531B relatively farther away from the second slant convexes 532, 532B has a relatively greater tilt angle α.

Similarly, the first plane G2 of the second slant convex 532 relatively closer to the first slant convexes 531, 531B has a relatively smaller tilt angle α. The first plane G2B of the second slant convex 532B relatively farther away from the first slant convexes 531, 531B has a relatively greater tilt angle α.

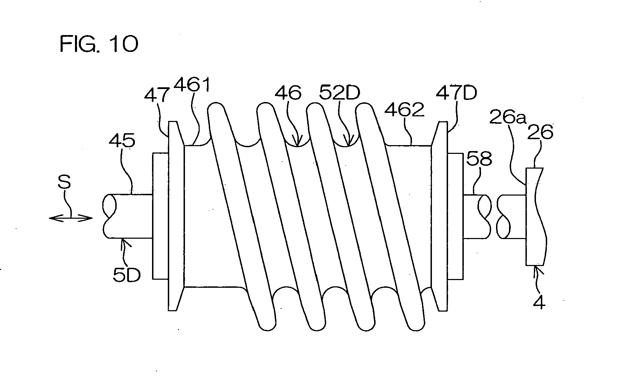

Further, as shown in FIG.10, the other end 462 of the tube 46 (the other end of a bellows portion 52D) may be connected rotatably together with the other yoke 26 of the first universal joint 4 via a shaft portion 58. The shaft portion 58 is an elongate shaft member as an intermediate member and is the same rod-like member as the shaft portion 45.

The other end 462 of the tube 46 is connected to the shaft portion 58 via a collar 47D. The other end 462 is rotatable together with the shaft portion 58 and is relatively unmovable in the axial direction S of an intermediate shaft 5D.

A fixing structure between the other end 462 of the tube 46 and the collar 47D is the same as the fixing structure between the one end 461 of the tube 46 and the collar 47. A fixing structure between the collar 47D and one end of the shaft portion 58 is the same as the fixing structure between the collar 47 and the one end of the shaft portion 45.

The other end of the shaft portion 58 is fixed to the main body 26a of the other yoke 26 of the first universal joint 4 by welding or the like. The tube 46 is disposed substantially centrally of the intermediate shaft 5D in the axial direction S.

The embodiment employs the shaft portion 58 as the intermediate member thereby to locate the bellows portion 52D close to the center of the intermediate shaft 5D. Thus, the bellows portion 52D as the buckling center of the intermediate shaft 5D can be shifted toward the center of the intermediate shaft 5D in the axial direction S. This makes the intermediate shaft 5D easier to buckle at primary collision. Such an excellent effect can be achieved by using the easily-manufactured elongate shaft portion 58.

The arrangement employing the shaft portion 58 may be applied to the respective embodiments shown in FIG.8 and FIG.9.

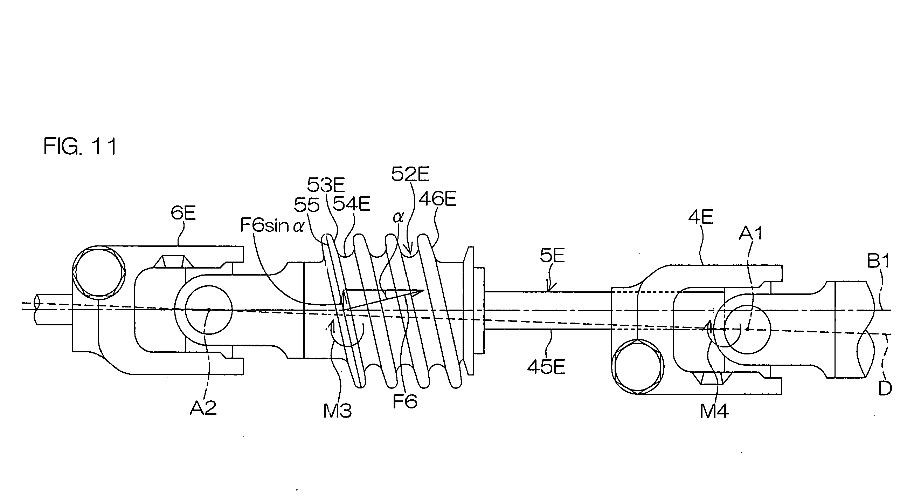

In an alternative arrangement, as shown in FIG.11, the joint center A1 of a first universal joint 4E as one universal joint may be arranged offset from the center axis B1 of an intermediate shaft 5E while the joint center A2 of a second universal joint 6E as the other universal joint may be located on the center axis B1 of the intermediate shaft 5E. 45E is a shaft that connects the tube 46E and the first universal joint 4E. The shaft 45E is disposed cable of moving relative to the axial direction S of the center axis B1.

In case of a motor vehicle collision, an impact force greater than a predetermined value is transmitted to the shaft 45E to the rear direction of the vehicle. Then, the shaft 45E is slid to the rear direction with respect to the first universal joint 4E, and an end of the shaft 45E collides with the cross shaft of the first universal joint 4E. In this case, as the joint center A1 of the first universal joint 4E is offset to the center axis B1 of the intermediate shaft 5E, a bending moment M4 is exerted on the intermediate shaft 5E.

Even in this case, a force F6 is transmitted from one slant convex 53E to an adjoining concave 54E at primary collision. A bending moment M3 is derived due to a component F6sinα perpendicular to the center axis B1. A direction in which the bending moment M3 bends a bellows portion 52E is the same as a direction in which the bending moment M4 bends the bellows portion 52E.

The bellows portion 52E of the embodiment shown in FIG.11 may be replaced by the bellows portion 52A shown in FIG.8 or the bellows portion 52B shown in FIG.9. Further, the shaft portion 58 may be interposed between a tube 46E and a second universal joint 6E.

The invention may be applied to an electric power steering apparatus or a hydraulic power steering apparatus.

While the invention has been described in greater details by way the specific examples thereof, it is apparent that changes, modifications and equivalents thereof will occur to those skilled in the art who have understood the above contents. The scope of the invention, therefore, is to be construed as defined by the appended claims and their equivalents.

## Claims

1. A shock absorbing steering apparatus for motor vehicle (1) comprising:
an intermediate shaft (5; 5A; 5D; 5E) including first and second ends (25,30);
a first universal joint (4;4E) for connecting the first end (25) of the intermediate shaft (5;5A;5D;5E) and a steering shaft (3); and
a second universal joint (6;6E) for connecting the second end (30) of the intermediate shaft (5;5A;5D;5E) and an input shaft (8) of a steering gear (7),
wherein the intermediate shaft (5;5A;5D;5E) includes a hollow bellows portion (52; 52A; 52B; 52D; 52E) having convexes (53;531,532;531B,532B,57;53E) and concaves (54;54A;54E) alternating with each other,
wherein the convexes (53;531,532;531B,532B,57; 53E) include at least one slant convex (53;531,532; 531B,532B;53E), and
wherein a plane (G;G1,G2;G1B,G2B) including a ridge line (55) of the slant convex (53;531,532;531B,532B;53E) is tilted to a perpendicular plane (C) perpendicular to a center axis (B1) of the intermediate shaft (5;5A;5D;5E) so that a part of an axial force (F2) exerted on the intermediate shaft (5;5A;5D;5E) at a motor vehicle collision is converted to a bending force (M1,M2;M3,M4) on the intermediate shaft (5;5A;5D;5E).

2. A shock absorbing steering apparatus for motor vehicle (1) according to Claim 1, wherein the slant convex (53;53E) is provided more than one, and
wherein the planes (G) including the ridge lines (55) of the slant convexes (53;53E) are tilted in a same direction.

3. A shock absorbing steering apparatus for motor vehicle (1) according to Claim 1 or Claim 2, wherein the ridge line (55) defines a circle, and
wherein a center (A3) of the ridge line (55) is located on the center axis (B1).

4. A shock absorbing steering apparatus for motor vehicle (1) according to any of Claims 1 to 3, wherein a plane (H) including a root line (56) of the concave (54;54A;54E) is tilted to the perpendicular plane (C).

5. A shock absorbing steering apparatus for motor vehicle (1) according to any of Claims 1 to 4, wherein the root line (56) defines a circle, and
wherein a center (A4) of the root line (56) is located on the center axis (B1).

6. A shock absorbing steering apparatus for motor vehicle (1) according to any of Claims 1 to 5, wherein the center axis (B1) is tilted to a line (D) connecting respective joint centers (A1,A2) of the first and second universal joints (4,6;4E,6E) so that a part of the axial force (F2) exerted on the intermediate shaft (5;5A;5D;5E) at a motor vehicle collision is converted to the bending force (M1,M2;M3,M4) on the intermediate shaft (5;5A;5D;5E).

7. A shock absorbing steering apparatus for motor vehicle (1) according to Claim 6, wherein either one of the joint center (A2;A1) of the first and second universal joints (4,6;4E,6E) is arranged offset from the center axis (B1) while the other joint center (A1;A2) is located on the center axis (B1).

8. A shock absorbing steering apparatus for motor vehicle (1) according to Claim 6 or Claim 7, wherein in a motor vehicle collision, the bending force (M2;M3) on the intermediate shaft (5;5D;5E) produced due to the tilting of the plane (G) including the ridge line (55) of the slant convex (53,53E) to the perpendicular plane (C) is in a same direction as the bending force (M1;M4) on the intermediate shaft (5;5D;5E) produced due to the tilting of the center axis (B1) to the line (D).

9. A shock absorbing steering apparatus for motor vehicle (1) according to Claim 1, wherein the slant convex (531,532;531B,532B) includes a first slant convex (531;531B) and a second slant convex (532;532B), and
wherein the plane (G1;G1B) including the ridge line (55) of the first slant convex (531;531B) and the plane (G2;G2B) including the ridge line (55) of the second slant convex (532,532B) are tilted to the perpendicular plane (C) in mutually opposite directions.

10. A shock absorbing steering apparatus for motor vehicle (1) according to Claim 9, wherein the first slant convex (531, 531B) and the second slant convex (532, 532B) are each provided more than one, and
wherein a first group (71) including the respective first slant convexes (531,531B) and a second group (72) including the respective second slant convexes (532, 532B) are arranged spaced away from each other in an axial direction (S) of the intermediate shaft (5A).

11. A shock absorbing steering apparatus for motor vehicle (1) according to Claim 9 or Claim 10, wherein the planes (G1) including the ridge lines (55) of the respective first slant convexes (531) have a same tilt angle (α) to the perpendicular plane (C).

12. A shock absorbing steering apparatus for motor vehicle (1) according to Claim 9 or Claim 10, wherein the planes (G2) including the ridge lines (55) of the respective second slant convexes (532) have a same tilt angle (α) to the perpendicular plane (C).

13. A shock absorbing steering apparatus for motor vehicle (1) according to Claim 9 or Claim 10, wherein the plane (G1B) including the ridge line (55) of the first slant convex (531B) relatively farther away from the second slant convexes (532;532B) has a relatively greater tilt angle (α) to the perpendicular plane (C) while the plane (G1) including the ridge line (55) of the first slant convex (531) relatively closer to the second slant convexes (532;532B) has a relatively smaller tilt angle (α) to the perpendicular plane (C).

14. A shock absorbing steering apparatus for motor vehicle (1) according to Claim 9 or Claim 10, wherein the plane (G2B) including the ridge line (55) of the second slant convex (532B) relatively farther away from the first slant convexes (531;531B) has a relatively greater tilt angle (α) to the perpendicular plane (C) while the plane (G2) including the ridge line (55) of the second slant convex (532) relatively closer to the first slant convexes (531;531B) has a relatively smaller tilt angle (α) to the perpendicular plane (C).
